# Europäisches Patentamt

European Patent Office

Office européen des brevets

(11) Publication number: **0 117 316**
**B1**

# EUROPEAN PATENT SPECIFICATION

(45) Date of publication of patent specification: **13.08.86**

(51) Int. Cl.⁴: **C 01 D 15/00, C 01 D 15/04**

(21) Application number: **83200304.0**

(22) Date of filing: **01.03.83**

(54) **A method of leaching lithium values from a brine-contaminated resin/aluminate composite.**

(43) Date of publication of application:
05.09.84 Bulletin 84/36

(45) Publication of the grant of the patent:
13.08.86 Bulletin 86/33

(84) Designated Contracting States:
DE FR GB

(56) References cited:
EP-A-0 032 563
US-A-4 159 311

(73) Proprietor: **THE DOW CHEMICAL COMPANY**
**2030 Dow Center Abbott Road P.O. Box 1967**
**Midland, MI 48640 (US)**

(72) Inventor: **Lee, John Malcolm**
**123 Aster Lane**
**Lake Jackson Texas 77566 (US)**
Inventor: **Bauman, William Carrel**
**440 Highway 332, No. 12**
**Lake Jackson Texas 77566 (US)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The present invention pertains to a method for obtaining a high purity lithium halide solution from a resin/aluminate composite.

U.S. Patents 4,116,856; 4,116,858; and 4,159,311 disclose preparation of, and use for, ion-exchange resins having incorporated therein crystalline $LiX \cdot 2Al(OH)_3$, where X is halide, especially chloride.

When resin/aluminate composites are employed to absorb $Li^+$ ions from brines by having the $Li^+$ taken up into the aluminate crystals, there still remains in the interstices of the composite some of the brine from which the $Li^+$ ions have been absorbed. When the brine contains other metal ions (i.e., other than alkali metal ions) such as alkaline earth metal ions, then when an aqueous wash is employed to elute desired $Li^+$ ions from the crystals, the effluent also contains these other metal ions which were in the interstices but which were not in the crystal structure.

It has now been found that the use of a concentrated pure Na halide brine washing step before the water washing step used for $Li^+$ leaching, results in washing out the metal ions (such as alkaline earth metal ions) without leaching out a significant amount of the $Li^+$ in the aluminate crystals. Then when water is employed to leach out the $Li^+$ in the aluminate crystals, the only other metal ions present in any appreciable amount in the effluent are those of the Na halide brine.

In accordance with the present invention concentrated, relatively pure, Na halide brine is used as a pre-wash before the water leaching of $Li^+$ values from a composite comprising an ion-exchange resin having incorporated therein a crystalline lithium halide aluminate composition. Thus the Na halide which is washed from the interstices of the composite by the water leaching is mostly present in the initial portions of the effluent and in decreasing amounts in the subsequent portions of lithium halide solution. Thus there is obtained a lithium halide solution which contains only Na halide as an impurity in significant amount.

The "resin/aluminate composites", used in the present invention are preferably prepared by incorporating crystalline $LiX \cdot 2Al(OH)_3$ (where X is halide) into ion-exchange resins, as are shown in the references listed supra, including the heavily loaded resins described in EP—A—0 029 253.

As used herein, the "halide" of the expression "Na halide" or "LiX" refers to Cl, Br, or I, with Cl being preferred. For simplicity in this disclosure the "halide" will be shown as the preferred chloride, with the understanding that bromide or iodide is also suitable.

The relatively pure Na halide brine, hereinafter referred to as NaCl brine for purposes of conciseness, may also be taken to mean an "alkali metal halide brine" other than lithium halide brine, though a small amount of $Li^+$ in the NaCl brine is beneficial. It is this relatively pure, but concentrated, NaCl brine which is used as the pre-wash for the lithium-loaded resin/aluminate composite before the water leaching step; the water leaching step is done to remove much of the $Li^+$ values from the composite (but not all of the $Li^+$ values), thereby substantially "unloading" the composite. This concentrated NaCl brine is preferably at or near saturation, but any concentration above about 20 percent should provide a reasonably efficient operation. At further reduced concentrations the operation becomes less and less efficient. From a practical standpoint to achieve an economical and efficient operation, the concentration is preferably from 24 percent to 26 percent.

The $Li^+$-containing aqueous solution or brine solution from which $Li^+$ ions are desirably removed are those which are contaminated with metal ions other than $Li^+$ or alkali metal ions. These other metal ions are usually alkaline earth metal ions, such as $Mg^{++}$, $Ca^{++}$, etc., but may also be virtually any other non-alkali metal cation.

The $Li^+$-loaded resin/aluminate composites, having in the interstices thereof any contaminating metal cations other than alkali metal cations, would ordinarily be derived from a process wherein a substantially "unloaded" composite is used to absorb or take up $Li^+$ ions from an impure brine, thereby becoming "loaded" with $Li^+$ ions. Obviously, though, any such $Li^+$-loaded resin/aluminate having the "other" metal cations in the interstices thereof may be used in the present process. The purpose and intent of the present process is to remove the contaminating metal cations from the interstices without removing a significant amount of the $Li^+$ ions; this is done by using a relatively pure, preferably concentrated NaCl pre-wash which leaves the $Li^+$ ions in place, but which leaves the interstices filled with the relatively pure NaCl brine which is essentially devoid of the said contaminating metal cations.

When water leaching is subsequently employed to remove $Li^+$ from the composite, the initial portions of effluent wash out much of the NaCl and some of the $Li^+$; subsequent portions comprise substantially pure Li solutions having NaCl as virtually the only contaminant. It is preferable than not all the $Li^+$ be removed from the crystalline $LiX \cdot 2Al(OH)_3$ because removal of all the $Li^+$ can cause collapse or destruction of the crystalline aluminate structure. Therefore it is best if the water which is used for water leaching contains a small amount of $Li^+$ (say, at least about 80 ppm) as this prevents total removal of $Li^+$ from the aluminate structure.

It is believed that the greater the concentration of NaCl in the solution, the greater is the tendency for the crystalline aluminate structure to adsorb, and hold, the $Li^+$ values. Upon water leaching, the concentration of NaCl in the interstices of the composite is reduced and as the reduction is occurring, the $Li^+$ is becoming more and more leachable from the crystal.

One of the techniques by which $Li^+$ values are removed from aqueous solution is by precipitation as lithium carbonate $(Li_2CO_3)$. If other metal cations, such as alkaline earth metal cations, are present they may

# 0 117 316

also precipitate as carbonates along with the lithium. Sodium carbonate does not precipitate with the lithium carbonate, therefore NaCl in the Li$^+$ solution does not pose the same contamination problems as the other metal cations. Furthermore, if NaCl is the only contaminant in the Li$^+$ solution, the NaCl can be crystallized by evaporation of most of the water, leaving a pure concentrated LiCl solution; this would not be possible with the alkaline earth metals.

The water used for water leaching the Li$^+$ from the aluminate structure in the composite should be substantially devoid of other metal cations (such as alkaline earth metal cations) except that a small amount of Li$^+$ should be present, for purposes stated supra. Also a small amount of other alkali metal cations, such as Na$^+$ may be tolerated. Deionized (softened) water may be used as well as distilled water or other reasonably pure water, so long as there is no substantial amount of alkaline earth metal or other non-alkali metal cations present.

The following examples are given to illustrate certain embodiments, though the invention is not limited to the particular embodiments illustrated.

In the following example, the water leaching step is performed using deionized water containing about 68 ppm Li$^+$ ions. The crude (impure) Li$^+$-containing feed brine from which Li$^+$ ions are to be extracted is a mineral brine from the Smackover deposit near Magnolia, Arkansas which was substantially saturated with NaCl and which contained, nominally about 280 ppm Li$^+$ ions, about 6.2 percent Na$^+$, about 17.05 percent Cl$^-$, about 0.41 percent K$^+$, about 0.31 percent Mg$^{++}$, about 3.3 percent Ca$^{++}$, about 0.23 percent Sr$^{++}$, about 0.022 percent B$^{+++}$, about 20—30 ppm Mn$^{++}$, about 20—30 ppm Mo$^{++}$, and about 9—10 ppm Cu$^{++}$; its pH was about 5.8. The substantially pure NaCl brine used as a pre-wash before water leaching was saturated, contained about 200 ppm Li$^+$ ions, and was about 6.3 pH. The resin/aluminate composite was a weak base anion-exchange resin, available commercially from The Dow Chemical Company under the tradename DOWEX MWA-1, into which had been incorporated crystalline LiCl · 2Al(OH)$_3$. The vessel employed was a glass ion-exchange column of 120 cc volume which was jacketed for temperature control by circulating fluid.

## Example 1

The ion-exchange column was filled with the resin/aluminate composite which had been water leached to substantially "unload" the composite with respect to its Li$^+$ content. At a temperature of about 77°C and a flow rate of 10 cc/min., the crude feed brine was passed through the composite bed until the total hardness (Mg$^{++}$, Ca$^{++}$, etc.), as determined by standard versene method, was the same entering and leaving the column. Then a relatively pure saturated NaCl brine pre-wash was used to displace the crude feed brine remaining in the interstices of the composite; the pre-wash was passed through at 3.3 cc/min. until the amount of hardness in the effluent was less than 0.002 M. Following that the water leaching step was done, using water flow at 3.3 cc/min.

The effluent from the column was taken as cuts for analysis of density, molar hardness, and ppm Li$^+$. Table I demonstrates the elution pattern for one cycle of loading brine wash/leaching. It will be readily understood by persons skilled in these arts that the "unloaded" composite may be employed in numerous such cycles.

TABLE I

| Effluent cuts | | Density (g/cc) | Hardness (molar) | Li⁺ (ppm) | Remarks |
|---|---|---|---|---|---|
| No. | Vol. cc | | | | |
| 1 | 50 | 1.137 | — | — | "Feed" brine in |
| 2 | 50 | 1.186 | — | — | |
| 3 | 50 | 1.182 | — | — | |
| 4 | 48 | 1.190 | 1.144 | — | |
| 5 | — | — | — | — | |
| 6 | — | — | — | — | |
| 7 | — | 1.207 | 1.156 | — | begin brine wash |
| 8 | 50 | — | 1.076 | — | |
| 9 | 25 | 1.162 | 0.504 | — | |
| 10 | — | 1.144 | — | — | |
| 11 | 25 | 1.146 | 0.032 | 270 | |
| 12 | 25 | — | 0.012 | 210 | |
| 13 | 25 | — | 0.002 | 190 | |
| 14 | 25 | — | — | 170 | |
| 15 | 25 | — | — | 150 | begin water leach |
| 16 | 25 | — | — | 145 | |
| 17 | 25 | — | — | 115 | |
| 18 | 25 | — | — | 100 | |
| 19 | 25 | — | — | 1324 | |
| 20 | 25 | — | — | 1375 | |
| 21 | 25 | — | — | 675 | |
| 22 | 25 | — | — | 490 | |
| 23 | 25 | — | — | 385 | |
| 24 | 25 | — | — | 320 | |
| 25 | 25 | — | — | 290 | |

The peak cuts (19—24) contained very little hardness, if any.

Example 2—Comparative Example

This example demonstrates the effect of omitting the NaCl pre-wash of the present invention. The procedure of Example 1 above is substantially followed except that the exchange column bed was 170 cc volume, the resin composite contained a higher loading of the $LiCl \cdot 2Al(OH)_3$ crystalline material such as prepared substantially in accordance with the process disclosed in US patent specification No. 4,381,349 (EP—A—0 029 253), the temperature of the column was 90°C, the flow rate was 2.5 percent of bed volume per minute, and the water wash contained about 60 ppm Li$^+$. After passing enough of the Smackover brine through the resin/aluminate composite to "load" the composite with Li$^+$ values, the water leaching step was conducted without a NaCl solution pre-wash. As can be seen from the data in Table II below, the "peak" cuts for Li$^+$ concentration contained a substantial amount of hardness values.

TABLE II

| Effluent cuts | | Molar hardness | ppm Li$^+$ | Remarks |
|---|---|---|---|---|
| No. | Vol. cc | | | |
| 1 | 50 | 1.29 | 350 | water leaching |
| 2 | 10 | 1.29 | 350 | |
| 3 | 10 | 1.30 | 350 | |
| 4 | 10 | 1.31 | 350 | |
| 5 | 5 | 1.29 | 350 | |
| 6 | 5 | 1.29 | 400 | |
| 7 | 5 | 1.34 | 450 | |
| 8 | 5 | 1.32 | 700 | |
| 9 | 5 | 1.14 | 2700 | |
| 10 | 5 | 0.75 | 6250 | |
| 11 | 5 | 0.42 | 7600 | |
| 12 | 5 | 0.24 | 6900 | |
| 13 | 5 | 0.14 | 6000 | |
| 14 | 5 | 0.07 | 5000 | |
| 15 | 5 | 0.06 | 4350 | |
| 16 | 5 | 0.05 | 3800 | |
| 17 | 5 | 0.03 | 3300 | |
| 18 | 5 | 0.02 | 300 | |

Example 3

This example is run substantially as in Example 1. The Smackover brine was pumped down-flow through a 120 cc bed of lithium chloroaluminate in DOWEX MWA-1 resin until the effluent contained the same concentration of Li$^+$ as the feed; this was tested by standard atomic absorption methods. A pre-wash of pure, saturated NaCl brine was passed through the bed at a flow rate of 2.75 percent of bed volume per minute and the effluent collected in cuts. After about 0.83 bed volumes of the pre-wash, the bed was flushed with deionized water containing 280 ppm Li for 1.66 bed volumes and the effluent collected in cuts. Then the flow of Smackover brine was resumed at a flow rate of 8.2 percent bed volumes per minute to recharge or "reload" the resin composite with lithium. Table III shows the elution data.

0 117 316

TABLE III

| Effluent cuts | | Molar hardness | ppm Li$^+$ | Remarks |
| No. | Vol. cc | | | |
| --- | --- | --- | --- | --- |
| 1 | 10 | 1.128 | 302 | Sat'd NaCl Pre-wash |
| 2 | 10 | | 367 | |
| 3 | 10 | | 375 | |
| 4 | 10 | | 377 | |
| 5 | 10 | 1.148 | 377 | |
| 6 | 10 | 1.020 | 376 | |
| 7 | 10 | 0.670 | 424 | |
| 8 | 10 | 0.432 | 408 | |
| 9 | 10 | 0.272 | 506 | |
| 10 | 10 | 0.188 | 532 | |
| 11 | 10 | 0.144 | 511 | Begin water wash (280 ppm Li$^+$) |
| 12 | 10 | 0.108 | 527 | |
| 13 | 10 | 0.072 | 513 | |
| 14 | 10 | 0.036 | 496 | |
| 15 | 10 | 0.048 | 479 | |
| 16 | 10 | 0.028 | 315 | |
| 17 | 10 | 0.072 | 1650 | |
| 18 | 10 | 0.052 | 4975 | |
| 19 | 10 | 0.028 | 4275 | |
| 20 | 10 | 0.020 | 3575 | |
| 21 | 10 | — | 2825 | |
| 22 | 10 | 0.012 | 2425 | |
| 23 | 10 | 0.002 | 2075 | |
| 24 | 10 | 0.006 | 1800 | |
| 25 | 10 | — | 1525 | |
| 26 | 10 | — | 1375 | |
| 27 | 10 | — | 1250 | |
| 28 | 10 | — | 1175 | |
| 29 | 10 | — | 1075 | |
| 30 | 10 | 0.006 | 992 | |

6

TABLE III (contd.)

| Effluent cuts | | Molar | | |
| No. | Vol. cc | hardness | ppm Li⁺ | Remarks |
|---|---|---|---|---|
| 31 | 10 | 0.004 | 971 | Begin filtered Smackover brine |
| 32 | 10 | 0.008 | 1000 | |
| 33 | 10 | 0.008 | 928 | |
| 34 | 10 | 0.008 | 793 | |
| 35 | 10 | 0.184 | 383 | |
| 36 | 10 | 0.368 | 138 | |
| 37 | 10 | 0.496 | 45 | |
| 38 | 10 | 0.640 | 34 | |
| 39 | 10 | 0.736 | 28 | |
| 40 | 10 | 0.816 | 24 | |

Of the above cuts, 18—21 were taken as the product cut, having about 3912 ppm Li⁺ and low hardness. The remaining cuts were used as follows, most of them being used in a concentrating cycle, which data is shown in Table IV below.

Cuts 1—6 were recycled back to the feed tank. Cuts 7, 8 and 9 were combined and flowed through a resin/aluminate bed to "load" the Li⁺ into the resin. Cuts 10—13 were combined and passed through the resin bed. Cuts 14—15 were combined and passed through the resin bed. Then 33 cc of fresh make-up brine was passed through to replace portions of cuts 7—15 which had been lost or taken out through samplings. Cuts 16 and 17 were combined, saturated with NaCl and passed through the bed. Cuts 18—21 were saved as product samples. Cuts 22—23 were combined and then passed through the bed. A make-up quantity (34 cc) of 280 ppm Li⁺ deionized water was passed through the bed. The data are in Table IV.

TABLE IV

| Effluent cuts | | Molar | | |
| No. | Vol. cc | hardness | ppm Li⁺ | Remarks |
|---|---|---|---|---|
| 1 | 10 | 1.120 | 350 | Previous cuts through bed |
| 2 | 10 | — | 392 | |
| 3 | 10 | 1.164 | 401 | |
| 4 | 10 | — | 408 | |
| 5 | 10 | 1.132 | 413 | |
| 6 | 10 | — | 429 | |
| 7 | 10 | 0.888 | 447 | |
| 8 | 10 | 0.700 | 471 | |
| 9 | 10 | 0.524 | 514 | |
| 10 | 10 | 0.380 | 533 | |
| 11 | 10 | 0.296 | 565 | |
| 12 | 10 | 0.232 | 565 | |

7

TABLE IV (contd.)

| Effluent cuts | | Molar hardness | ppm Li⁻ | Remarks |
|---|---|---|---|---|
| No. | Vol. cc | | | |
| 13 | 10 | 0.164 | 579 | |
| 14 | 10 | 0.128 | 571 | |
| 15 | 10 | 0.080 | 575 | |
| 16 | 10 | 0.064 | 564 | |
| 17 | 10 | 0.052 | 573 | |
| 18 | 10 | 0.076 | 731 | |
| 19 | 10 | 0.100 | 3950 | |
| 20 | 10 | 0.052 | 5440 | Cuts 20—23 |
| 21 | 10 | 0.028 | 4675 | taken as prod- uct cuts, com- |
| 22 | 10 | 0.024 | 3925 | bined, had |
| 23 | 10 | 0.016 | 3400 | 4360 ppm Li⁺ |
| 24 | 10 | 0.012 | 2900 | |
| 25 | 10 | 0.106 | 2575 | |
| 26 | 10 | 0.008 | 2325 | |
| 27 | 10 | 0.008 | 2250 | |
| 28 | 10 | 0.008 | 2075 | |
| 29 | 10 | 0.008 | 2000 | |
| 30 | 10 | 0.248 | 814 | |
| 31 | 10 | 0.472 | 346 | |
| 32 | 10 | 0.612 | 178 | |

Example 4

For this test, to show further concentrating of $Li^+$ values by performing a multiple number of absorptions and desorptions of the $Li^+$ values, selected cuts are taken from the cuts shown in Table IV above.

This preferred method of operating, then, involves utilizing portions of the effluent in succeeding runs. This could be accomplished by storing the effluent in a coil or a succession of tanks to approximate the gradients. Thus the only "new" feed needed for each elution cycle would be a make-up amount of fresh deionized water (containing a small amount of $Li^+$), equivalent in volume to the product cut, and enough NaCl to resaturate a portion of the gradient to be called "reflux". By successive operations, using Li-containing cuts from prior runs, the concentration of the product is increased above that possible in a single cycle.

Referring to the cuts of Table IV above, the first 6 cuts, being relatively high in hardness and low in Li, are recycled back to the Smackover brine feed. Cuts 7, 8 and 9 are combined and are used as the first solution pumped into a column to elute an equivalent volume of Smackover brine. Cuts 10, 11 and 12 are combined and pumped through after the 7, 8, 9 mixture. This is then followed with a solution made by mixing 13, 14, 15 and 16; then 17, 18 and 19 are resaturated with NaCl and pumped into the column. Cuts 20, 21, 22 and 23 were saved as product. Cuts 24—30 were combined to follow the "reflux" mixture of 17, 18, 19. Next a volume of 280 ppm $Li^+$ deionized water (equivalent to volume of product cuts) follows the 24—30 cut mixture. The effluent for all this was collected in cuts as before to use in a subsequent

8

concentrating cycle. This procedure was followed until by the fifth cycle, the product cut had increased from 3912 ppm Li$^+$ (first cycle) to 5531 ppm Li$^+$ (fifth cycle), with little or no increase in total hardness.

**Claims**

1. A method for leaching Li$^+$ values from a macroporous resin/aluminate composite which contains contaminated brine, said resin/aluminate composite comprising an anion-exchange resin having crystalline LiX · 2Al(OH)$_3$ dispersed therein, where X is Cl, Br or I, and being substantially loaded with respect to Li$^+$ values, by water leaching the Li$^+$ values from the resins, characterized in that the composite is prewashed with a substantially pure, contaminant-free, concentrated alkali metal halide solution, halide being chloride, bromide or iodide to substantially wash the contaminated brine from the composite without significantly removing Li$^+$ values, and water leaching the substantially pure alkali metal halide solution and a substantial amount of Li$^+$ values from the composite, leaving the composite substantially unloaded with respect to Li$^+$ values, whereby an amount of Li$^+$ values is maintained in the composite to prevent collapse of its crystal structure.

2. The method of Claim 1 wherein X is chloride.

3. The method of Claim 1 or 2 wherein the alkali metal halide solution is a saturated sodium chloride solution.

4. The method of Claim 3 wherein the concentration of the sodium chloride solution is in the range of from 20 percent to 26 percent.

5. The method of any one of the preceding claims wherein the water used for the water leaching contains at least 80 ppm Li$^+$.

6. The method of any one of the preceding claims wherein the concentrated alkali metal halide solution used for the pre-wash contains a minor amount of Li halide.

7. The method of Claim 6 in which the Li halide is derived from the pre-wash step and/or the water leaching step of at least one previous loading-unloading cycle.

8. The method of Claim 6 wherein the alkali metal halide solution, which contains a minor amount of Li halide, is prepared by adding NaCl to at least a portion of the eluate from the water leaching step of a previous loading-unloading cycle.

9. The method of any one of Claims 1 to 6 wherein the substantially unloaded composite is reloaded with Li$^+$ values by contacting with a Li$^+$-containing contaminated brine.

**Patentansprüche**

1. Verfahren zum Auslaugen von Lithiumwerten aus einer grobporigen, mit Lauge verunreinigten Aluminatharzmasse, wobei das Aluminatharz ein Anionenaustauschharz mit darin dispergiertem kristallinen LiX · 2Al(OH)$_3$ enthält und X gleich Cl, Br oder J bedeutet und welches im wesentlichen mit Li$^+$-Werten beladen ist, wobei die Li$^+$-Werte mit Wasser ausgelaugt werden, dadurch gekennzeichnet, daß

— die Masse mit einer im wesentlichen reinen konzentrierten Alkalimetallhalogenidlösung, die frei von Verunreinigungen ist und bei der das Halogenid Chlorid, Bromid oder Jodid ist, vorgewaschen wird, um so die verunreinigte Lauge aus der Masse zu waschen, ohne daß dabei wesentliche Li$^+$-Werte entfernt werden

— und daß die im wesentlichen reine Alkalimetallhalogenidlösung und eine wesentliche Menge an Lithiumwerten aus der Masse mit Wasser ausgelaugt werden, wobei die Masse weitgehend von Lithiumwerten entladen wird, jedoch noch eine solche Menge an Lithiumwerten enthält, die sie vor dem Zusammenbruch ihrer Kristallstruktur bewahrt.

2. Verfahren nach Anspruch 1, dadurch gekennzeichnet, daß X gleich Chlorid ist.

3. Verfahren nach Anspruch 1 oder 2, dadurch gekennzeichnet, daß als Alkalimetallhalogenidlösung eine gesättigte Natriumchloridlösung verwendet wird.

4. Verfahren nach Anspruch 3, dadurch gekennzeichnet, daß die Konzentration der Natriumchlorid- lösung 20 bis 26% beträgt.

5. Verfahren nach einem der vorhergehenden Ansprüche, dadurch gekennzeichnet, daß das Wasser, welches zum Auslaugen mit Wasser verwendet wird, mindestens 80 ppm Li$^+$ enthält.

6. Verfahren nach einem der vorhergehenden Ansprüche, dadurch gekennzeichnet, daß die konzentrierte Alkalimetallhalogenidlösung, die zum Vorwaschen verwendet wird, eine geringe Menge Lithiumhalogenid enthält.

7. Verfahren nach Anspruch 6, dadurch gekennzeichnet, daß das Lithiumhalogenid durch das Vorwaschen und/oder das Auslaugen mit Wasser zumindest eines vorhergehenden Beladungs-Entladungszyklus erhalten wird.

8. Verfahren nach Anspruch 6, dadurch gekennzeichnet, daß die Alkalimetallhalogenidlösung, die eine geringe Menge von Lithiumhalogenid enthält, dadurch hergestellt wird, daß Natriumchlorid zumindest einem Teil des Eluats des Auslaugens mit Wasser vom vorhergehenden Beladungs-Entladungszyklus zugegeben wird.

9

**0 117 316**

9. Verfahren nach einem der Ansprüche 1 bis 6, dadurch gekennzeichnet, daß die weitgehend entladene Masse dadurch mit Lithiumwerten wieder beladen wird, daß sie mit einer Lithium enthaltenden verunreinigten Lauge zusammengebracht wird.

**Revendications**

1. Procédé d'extraction par lessivage des ions Li⁺ hors d'un composite macroporeux résine/aluminate qui contient de la saumure contaminée, ledit composite résine/aluminate comprenant une résine échangeuse d'anions contenant à l'état dispersé du $LiX \cdot 2Al(OH)_3$ cristallin, où X est Cl, Br ou I, et étant substantiellement chargé en ions Li⁺, par lessivage à l'eau des ions Li⁺ hors de la résine, caractérisé en ce que le composite est lavé au préalable avec une solution concentrée, pratiquement pure, exempte de contaminants, d'halogénure de métal alcalin, l'halogénure étant un chlorure, un bromure, ou un iodure, pour extraite pratiquement par lavage la saumure contaminée hors du composite sans en éliminer significativement les ions Li⁺, et par lessivage à l'eau de la solution d'halogénure de métal alcalin pratiquement pure et d'une quantité substantielle d'ions Li⁺ hors du composite, laissant le composite pratiquement non chargé en ions Li⁺, une certaine quantité d'ions Li⁺ étant gardée à l'intérieur du composite afin de prévenir l'effondrement de sa structure cristalline.

2. Procédé de la revendication 1, dans lequel X est un chlorure.

3. Procédé de la revendication 1 ou 2, dans lequel la solution d'halogénure de métal alcalin est une solution saturée de chlorure de sodium.

4. Procédé de la revendication 3, dans lequel la concentration de la solution de chlorure de sodium se trouve dans le domaine allant de 20% à 26%.

5. Procédé de l'une quelconque des revendications précédentes, dans lequel l'eau utilisée pour le lessivage à l'eau contient au moins 80 ppm d'ions Li⁺.

6. Procédé de l'une quelconque des revendications précédentes, dans lequel la solution concentrée d'halogénure de métal alcalin utilisée pour le lavage au préalable contient une quantité mineure d'halogénure de lithium.

7. Procédé de la revendication 6, dans lequel l'halogénure de lithium provient de l'étape de lavage au préalable et/ou de l'étape de lessivage à l'eau d'au moins un cycle précédent de charge/décharge.

8. Procédé de la revendication 6, dans lequel la solution d'halogénure de métal alcalin qui contient une quantité mineure d'halogénure de lithium est préparée par addition de NaCl à au moins une portion de l'éluat provenant de l'étape de lessivage à l'eau d'un cycle précédent charge/décharge.

9. Procédé de l'une quelconque des revendications 1 à 6, dans lequel le composite pratiquement non chargé est rechargé en ions Li⁺ par contact avec une saumure contaminée contenant des ions Li⁺.